# EUROPEAN PATENT SPECIFICATION

(11) **EP 4 022 258 B1**
(45) Date of publication and mention of the grant of the patent: **26.02.2025**
(21) Application number: 20857654.6
(22) Date of filing: 31.08.2020
(51) Int. Cl.: G01D 1/00

(54) **MONITOR ASSIGNMENT SYSTEM AND METHOD**
MONITORZUWEISUNGSSYSTEM UND -VERFAHREN
SYSTÈME ET PROCÉDÉ D'ATTRIBUTION DE DISPOSITIF DE SURVEILLANCE

(30) Priority: 30.08.2019 US 201962893990 P
(43) Date of publication of application: 06.07.2022
(73) Proprietor: Magna Electronics Inc., Auburn Hills, Michigan 48326 (US)
(72) Inventor: HUANG, Albert, Sunnyvale, California 94087 (US); KARAMAN, Sertac, Cambridge, Massachusetts 02139 (US); MARSTON, Jonathan, Arlington, Massachusetts 02474 (US); HE, Ruijie, Boston, Massachusetts 02127 (US)
(74) Representative: FRKelly
(86) International application number: PCT/US2020/048780
(87) International publication number: WO 2021/042049

(56) References cited:
- WO-A1-2018/102475
- WO-A1-2018/102477
- WO-A1-2018/102477
- US-A1- 2018 081 360
- US-A1- 2018 336 510

## Description

### Technical Field

This disclosure relates to monitor assignment and, more particularly, to monitor assignment of autonomous vehicles.

### Background

As transportation moves towards autonomous (i.e., driverless) vehicles, the manufactures and designers of these autonomous vehicle must define contingencies that occur in the event of a failure of one or more of the systems within these autonomous vehicles.

As is known, autonomous vehicles contain multiple electronic control units (ECUs), wherein each of these ECUs may perform a specific function. For example, these various ECUs may calculate safe trajectories for the vehicle (e.g., for navigating the vehicle to its intended destination) and may provide control signals to the vehicle's actuators, propulsions systems and braking systems. Typically, one ECU (e.g., an Autonomy Control Unit) may be responsible for planning and calculating a trajectory for the vehicle, and may provide commands to other ECUs that may cause the vehicle to move (e.g., by controlling steering, braking, and powertrain ECUs).

As would be expected, such autonomous vehicles need to make navigation decisions that consider their surroundings / environment. And sometimes these autonomous vehicles require various levels of supervision by vehicle monitors. Unfortunately, the level of supervision required by an autonomous vehicle may vary in accordance with changes to the manner in which the autonomous vehicle is utilized, which may result in an unacceptably high workload for a vehicle monitor.
WO 2018/102477-A1 discloses methods and systems for providing remote support for autonomous operation of vehicles based on signal states and vehicle information. The disclosed technology receives state data for the vehicles by an apparatus such as a remote vehicle support apparatus. The state data indicates a respective current state for the vehicles. The vehicles are each assigned to respective remote vehicle support queues based on the respective state data. An indication that one of the vehicles is requesting remote support is received by the remote vehicle support apparatus. In response to a determination that a change in the state data indicates that autonomous operation of the one of the vehicles is operating outside of defined parameter values, the remote support is provided to the one of the vehicles through a communications link by transmitting instruction data to modify the autonomous operation of the one of the vehicles.
WO 2018/102475-A1 also discloses methods and systems providing remote support for autonomous operation of vehicles. State indicators are generated by a first state display based on state data from a portion of vehicles assigned to a respective first level control station. A second state display is generated for a second control station and displays state indicators for the state data of the vehicles. A remote support interface including the first state display and image data received from a first vehicle of the vehicles is generated. Instruction data to the first vehicle is transmitted using the remote support interface and based on an indication that the first vehicle needs remote support, the instruction data modifying the autonomous operation of the first vehicle. A workload between the first level control stations is allocated by assigning the vehicles using the state indicators of the second state display.

### Summary of Disclosure

The invention provides a computer-implement method, executed on a computing device, according to claim 1; a computer program product according to claim 8; and a computing system according to claim 9.

Further preferred features are set out in the dependent claims.

In one implementation, a computer-implement method is executed on a computing device and includes: defining a supervision level for each of a plurality of autonomous vehicles, thus defining a plurality of level-assigned autonomous vehicles; assigning responsibility for each of the level-assigned autonomous vehicles to one of a plurality of vehicle monitors, thus defining a vehicle workload for each of the plurality of vehicle monitors; sensing a change in the supervision level of a specific level-assigned autonomous vehicle assigned to a specific vehicle monitor; and reexamining the vehicle workload associated with the specific vehicle monitor.

One or more of the following features may be included. Sensing a change in the supervision level of a specific level-assigned autonomous vehicle assigned to a specific vehicle monitor may include: sensing that the specific level-assigned autonomous vehicle requires the full attention of the specific vehicle monitor. If the vehicle workload associated with the specific vehicle monitor exceeds a defined level, responsibility for some of the other level-assigned autonomous vehicles that are assigned to the specific vehicle monitor may be reassigned to another vehicle monitor. Reassigning responsibility for one or more of the level-assigned autonomous vehicles assigned to the specific vehicle monitor to another vehicle monitor may include: reassigning responsibility for all of the other level-assigned autonomous vehicles that are assigned to the specific vehicle monitor to another vehicle monitor. The supervision level defined for each of a plurality of autonomous vehicles may include one or more class-based supervision levels. The supervision level defined for each of a plurality of autonomous vehicles may include one or more score-based supervision levels. The plurality of vehicle monitors may include: a plurality of human vehicle monitors.

In another implementation, a computer program product resides on a computer readable medium and has a plurality of instructions stored on it. When executed by a processor, the instructions cause the processor to perform operations including: defining a supervision level for each of a plurality of autonomous vehicles, thus defining a plurality of level-assigned autonomous vehicles; assigning responsibility for each of the level-assigned autonomous vehicles to one of a plurality of vehicle monitors, thus defining a vehicle workload for each of the plurality of vehicle monitors; sensing a change in the supervision level of a specific level-assigned autonomous vehicle assigned to a specific vehicle monitor; and reexamining the vehicle workload associated with the specific vehicle monitor.

One or more of the following features may be included. Sensing a change in the supervision level of a specific level-assigned autonomous vehicle assigned to a specific vehicle monitor may include: sensing that the specific level-assigned autonomous vehicle requires the full attention of the specific vehicle monitor. If the vehicle workload associated with the specific vehicle monitor exceeds a defined level, responsibility for some of the other level-assigned autonomous vehicles that are assigned to the specific vehicle monitor may be reassigned to another vehicle monitor. Reassigning responsibility for one or more of the level-assigned autonomous vehicles assigned to the specific vehicle monitor to another vehicle monitor may include: reassigning responsibility for all of the other level-assigned autonomous vehicles that are assigned to the specific vehicle monitor to another vehicle monitor. The supervision level defined for each of a plurality of autonomous vehicles may include one or more class-based supervision levels. The supervision level defined for each of a plurality of autonomous vehicles may include one or more score-based supervision levels. The plurality of vehicle monitors may include: a plurality of human vehicle monitors.

In another implementation, a computing system includes a processor and memory is configured to perform operations including: defining a supervision level for each of a plurality of autonomous vehicles, thus defining a plurality of level-assigned autonomous vehicles; assigning responsibility for each of the level-assigned autonomous vehicles to one of a plurality of vehicle monitors, thus defining a vehicle workload for each of the plurality of vehicle monitors; sensing a change in the supervision level of a specific level-assigned autonomous vehicle assigned to a specific vehicle monitor; and reexamining the vehicle workload associated with the specific vehicle monitor.

One or more of the following features may be included. Sensing a change in the supervision level of a specific level-assigned autonomous vehicle assigned to a specific vehicle monitor may include: sensing that the specific level-assigned autonomous vehicle requires the full attention of the specific vehicle monitor. If the vehicle workload associated with the specific vehicle monitor exceeds a defined level, responsibility for some of the other level-assigned autonomous vehicles that are assigned to the specific vehicle monitor may be reassigned to another vehicle monitor. Reassigning responsibility for one or more of the level-assigned autonomous vehicles assigned to the specific vehicle monitor to another vehicle monitor may include: reassigning responsibility for all of the other level-assigned autonomous vehicles that are assigned to the specific vehicle monitor to another vehicle monitor. The supervision level defined for each of a plurality of autonomous vehicles may include one or more class-based supervision levels. The supervision level defined for each of a plurality of autonomous vehicles may include one or more score-based supervision levels. The plurality of vehicle monitors may include: a plurality of human vehicle monitors.

The details of one or more implementations are set forth in the accompanying drawings and the description below. Other features and advantages will become apparent from the description, the drawings, and the claims.

### Brief Description of the Drawings

FIG 1 is a diagrammatic view of an autonomous vehicle according to an embodiment of the present disclosure;
FIG 2A is a diagrammatic view of one embodiment of the various systems included within the autonomous vehicle of FIG 1 according to an embodiment of the present disclosure;
FIG 2B is a diagrammatic view of another embodiment of the various systems included within the autonomous vehicle of FIG 1 according to an embodiment of the present disclosure;
FIG 3 is a diagrammatic view of another embodiment of the various systems included within the autonomous vehicle of FIG 1 according to an embodiment of the present disclosure;
FIG 4 is a diagrammatic view of a plurality of vehicle monitors according to an embodiment of the present disclosure; and
FIG 5 is a flowchart of a monitor assignment process for assigning the vehicle monitors of FIG 4 according to an embodiment of the present disclosure.

Like reference symbols in the various drawings indicate like elements.

### Detailed Description of the Preferred Embodiments

### Autonomous Vehicle Overview

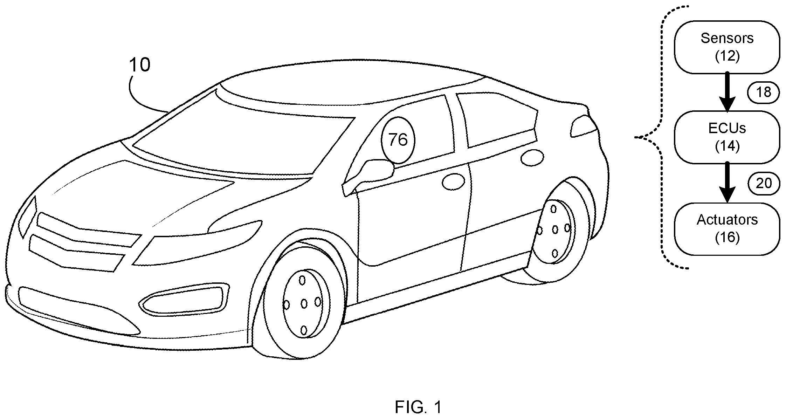

Referring to FIG 1, there is shown autonomous vehicle 10. As is known in the art, an autonomous vehicle (e.g. autonomous vehicle 10) is a vehicle that is capable of sensing its environment and moving with little or no human input. Autonomous vehicles (e.g. autonomous vehicle 10) may combine a variety of sensor systems to perceive their surroundings, examples of which may include but are not limited to radar, computer vision, LIDAR, GPS, odometry, temperature and inertia, wherein such sensor systems may be configured to interpret lanes and markings on a roadway, street signs, stoplights, pedestrians, other vehicles, roadside objects, hazards, etc.

Autonomous vehicle 10 may include a plurality of sensors (e.g. sensors 12), a plurality of electronic control units (e.g. ECUs 14) and a plurality of actuators (e.g. actuators 16). Accordingly, sensors 12 within autonomous vehicle 10 may monitor the environment in which autonomous vehicle 10 is operating, wherein sensors 12 may provide sensor data 18 to ECUs 14. ECUs 14 may process sensor data 18 to determine the manner in which autonomous vehicle 10 should move. ECUs 14 may then provide control data 20 to actuators 16 so that autonomous vehicle 10 may move in the manner decided by ECUs 14. For example, a machine vision sensor included within sensors 12 may "read" a speed limit sign stating that the speed limit on the road on which autonomous vehicle 10 is traveling is now 35 miles an hour. This machine vision sensor included within sensors 12 may provide sensor data 18 to ECUs 14 indicating that the speed on the road on which autonomous vehicle 10 is traveling is now 35 mph. Upon receiving sensor data 18, ECUs 14 may process sensor data 18 and may determine that autonomous vehicle 10 (which is currently traveling at 45 mph) is traveling too fast and needs to slow down. Accordingly, ECUs 14 may provide control data 20 to actuators 16, wherein control data 20 may e.g. apply the brakes of autonomous vehicle 10 or eliminate any actuation signal currently being applied to the accelerator (thus allowing autonomous vehicle 10 to coast until the speed of autonomous vehicle 10 is reduced to 35 mph).

### System Redundancy

As would be imagined, since autonomous vehicle 10 is being controlled by the various electronic systems included therein (e.g. sensors 12, ECUs 14 and actuators 16), the potential failure of one or more of these systems should be considered when designing autonomous vehicle 10 and appropriate contingency plans may be employed.

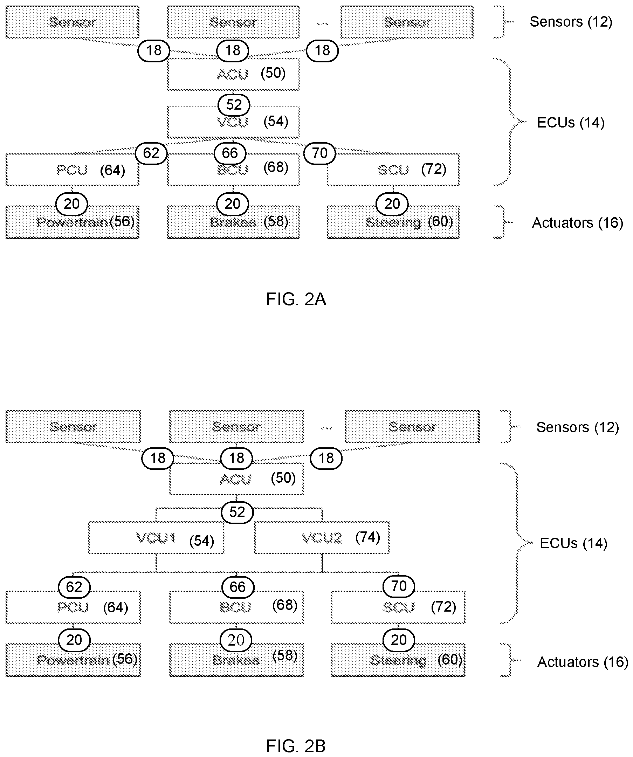

For example and referring also to FIG 2A, the various ECUs (e.g., ECUs 14) that are included within autonomous vehicle 10 may be compartmentalized so that the responsibilities of the various ECUs (e.g., ECUs 14) may be logically grouped. For example, ECUs 14 may include autonomy control unit 50 that may receive sensor data 18 from sensors 12.

Autonomy control unit 50 may be configured to perform various functions. For example, autonomy control unit 50 may receive and process exteroceptive sensor data (e.g., sensor data 18), may estimate the position of autonomous vehicle 10 within its operating environment, may calculate a representation of the surroundings of autonomous vehicle 10, may compute safe trajectories for autonomous vehicle 10, and may command the other ECUs (in particular, a vehicle control unit) to cause autonomous vehicle 10 to execute a desired maneuver. Autonomy control unit 50 may include substantial compute power, persistent storage, and memory.

Accordingly, autonomy control unit 50 may process sensor data 18 to determine the manner in which autonomous vehicle 10 should be operating. Autonomy control unit 50 may then provide vehicle control data 52 to vehicle control unit 54, wherein vehicle control unit 54 may then process vehicle control data 52 to determine the manner in which the individual control systems (e.g. powertrain system 56, braking system 58 and steering system 60) should respond in order to achieve the trajectory defined by autonomous control unit 50 within vehicle control data 52.

Vehicle control unit 54 may be configured to control other ECUs included within autonomous vehicle 10. For example, vehicle control unit 54 may control the steering, powertrain, and brake controller units. For example, vehicle control unit 54 may provide: powertrain control signal 62 to powertrain control unit 64; braking control signal 66 to braking control unit 68; and steering control signal 70 to steering control unit 72.

Powertrain control unit 64 may process powertrain control signal 62 so that the appropriate control data (commonly represented by control data 20) may be provided to powertrain system 56. Additionally, braking control unit 68 may process braking control signal 66 so that the appropriate control data (commonly represented by control data 20) may be provided to braking system 58. Further, steering control unit 72 may process steering control signal 70 so that the appropriate control data (commonly represented by control data 20) may be provided to steering system 60.

Powertrain control unit 64 may be configured to control the transmission (not shown) and engine / traction motor (not shown) within autonomous vehicle 10; while brake control unit 68 may be configured to control the mechanical / regenerative braking system (not shown) within autonomous vehicle 10; and steering control unit 72 may be configured to control the steering column / steering rack (not shown) within autonomous vehicle 10.

Autonomy control unit 50 may be a highly complex computing system that may provide extensive processing capabilities (e.g., a workstation-class computing system with multi-core processors, discrete co-processing units, gigabytes of memory, and persistent storage). In contrast, vehicle control unit 54 may be a much simpler device that may provide processing power equivalent to the other ECUs included within autonomous vehicle 10 (e.g., a computing system having a modest microprocessor (with a CPU frequency of less than 200 megahertz), less than 1 megabyte of system memory, and no persistent storage). Due to these simpler designs, vehicle control unit 54 may have greater reliability and durability than autonomy control unit 50.

To further enhance redundancy and reliability, one or more of the ECUs (ECUs 14) included within autonomous vehicle 10 may be configured in a redundant fashion. For example and referring also to FIG 2B, there is shown one implementation of ECUs 14 wherein a plurality of vehicle control units are utilized. For example, this particular implementation is shown to include two vehicle control units, namely a first vehicle control unit (e.g., vehicle control unit 54) and a second vehicle control unit (e.g., vehicle control unit 74).

In this particular configuration, the two vehicle control units (e.g. vehicle control units 54, 74) may be configured in various ways. For example, the two vehicle control units (e.g. vehicle control units 54, 74) may be configured in an active - passive configuration, wherein e.g. vehicle control unit 54 performs the active role of processing vehicle control data 52 while vehicle control unit 74 assumes a passive role and is essentially in standby mode. In the event of a failure of vehicle control unit 54, vehicle control unit 74 may transition from a passive role to an active role and assume the role of processing vehicle control data 52. Alternatively, the two vehicle control units (e.g. vehicle control units 54, 74) may be configured in an active - active configuration, wherein e.g. both vehicle control unit 52 and vehicle control unit 74 perform the active role of processing vehicle control data 54 (e.g. divvying up the workload), wherein in the event of a failure of either vehicle control unit 54 or vehicle control unit 74, the surviving vehicle control unit may process all of vehicle control data 52.

While FIG 2B illustrates one example of the manner in which the various ECUs (e.g. ECUs 14) included within autonomous vehicle 10 may be configured in a redundant fashion, this is for illustrative purposes only and is not intended to be a limitation of this disclosure, as other configurations are possible and are considered to be within the scope of this disclosure. For example, autonomous control unit 50 may be configured in a redundant fashion, wherein a second autonomous control unit (not shown) is included within autonomous vehicle 10 and is configured in an active - passive or active - active fashion. Further, it is foreseeable that one or more of the sensors (e.g., sensors 12) and/or one or more of the actuators (e.g. actuators 16) may be configured in a redundant fashion. Accordingly, it is understood that the level of redundancy achievable with respect to autonomous vehicle 10 may only be limited by the design criteria and budget constraints of autonomous vehicle 10.

### Autonomy Computational Subsystems

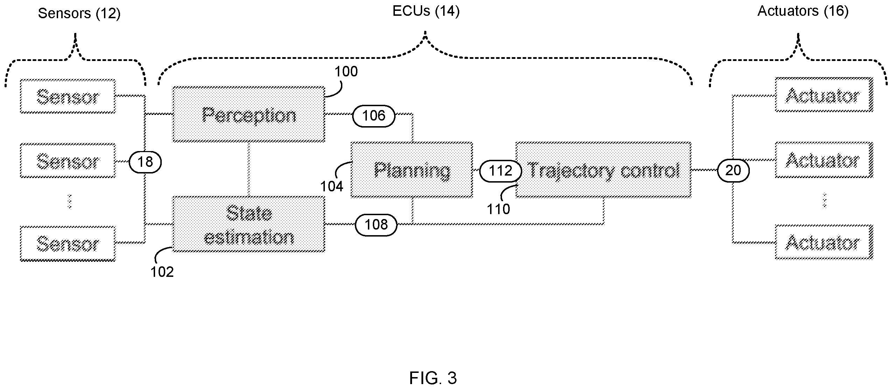

Referring also to FIG 3, the various ECUs of autonomous vehicle 10 may be grouped / arranged / configured to effectuate various functionalities.

For example, one or more of ECUs 14 may be configured to effectuate / form perception subsystem 100. wherein perception subsystem 100 may be configured to process data from onboard sensors (e.g., sensor data 18) to calculate concise representations of objects of interest near autonomous vehicle 10 (examples of which may include but are not limited to other vehicles, pedestrians, traffic signals, traffic signs, road markers, hazards, etc.) and to identify environmental features that may assist in determining the location of autonomous vehicle 10. Further, one or more of ECUs 14 may be configured to effectuate / form state estimation subsystem 102, wherein state estimation subsystem 102 may be configured to process data from onboard sensors (e.g., sensor data 18) to estimate the position, orientation, and velocity of autonomous vehicle 10 within its operating environment. Additionally, one or more of ECUs 14 may be configured to effectuate / form planning subsystem 104, wherein planning subsystem 104 may be configured to calculate a desired vehicle trajectory (using perception output 106 and state estimation output 108). Further still, one or more of ECUs 14 may be configured to effectuate / form trajectory control subsystem 110, wherein trajectory control subsystem 110 uses planning output 112 and state estimation output 108 (in conjunction with feedback and/or feedforward control techniques) to calculate actuator commands (e.g., control data 20) that may cause autonomous vehicle 10 to execute its intended trajectory within it operating environment.

For redundancy purposes, the above-described subsystems may be distributed across various devices (e.g., autonomy control unit 50 and vehicle control units 54, 74). Additionally / alternatively and due to the increased computational requirements, perception subsystem 100 and planning subsystem 104 may be located almost entirely within autonomy control unit 50, which (as discussed above) has much more computational horsepower than vehicle control units 54, 74. Conversely and due to their lower computational requirements, state estimation subsystem 102 and trajectory control subsystem 110 may be: located entirely on vehicle control units 54, 74 if vehicle control units 54, 74 have the requisite computational capacity; and/or located partially on vehicle control units 54, 74 and partially on autonomy control unit 50. However, the location of state estimation subsystem 102 and trajectory control subsystem 110 may be of critical importance in the design of any contingency planning architecture, as the location of these subsystems may determine how contingency plans are calculated, transmitted, and/or executed.

### Trajectory Calculation

During typical operation of autonomous vehicle 10, the autonomy subsystems described above repeatedly perform the following functionalities of:
- Measuring the surrounding environment using on-board sensors (e.g. using sensors 12);
- Estimating the positions, velocities, and future trajectories of surrounding vehicles, pedestrians, cyclists, other objects near autonomous vehicle 10, and environmental features useful for location determination (e.g., using perception subsystem 100);
- Estimating the position, orientation, and velocity of autonomous vehicle 10 within the operating environment (e.g., using state estimation subsystem 102);
- Planning a nominal trajectory for autonomous vehicle 10 to follow that brings autonomous vehicle 10 closer to the intended destination of autonomous vehicle 10 (e.g., using planning subsystem 104); and
- Generating commands (e.g., control data 20) to cause autonomous vehicle 10 to execute the intended trajectory (e.g., using trajectory control subsystem 110)

During each iteration, planning subsystem 104 may calculate a trajectory that may span travel of many meters (in distance) and many seconds (in time). However, each iteration of the above-described loop may be calculated much more frequently (e.g., every ten milliseconds). Accordingly, autonomous vehicle 10 may be expected to execute only a small portion of each planned trajectory before a new trajectory is calculated (which may differ from the previously-calculated trajectories due to e.g., sensed environmental changes).

### Trajectory Execution

The above-described trajectory may be represented as a parametric curve that describes the desired future path of autonomous vehicle 10. There may be two major classes of techniques for controlling autonomous vehicle 10 while executing the above-described trajectory: a) feedforward control and b) feedback control.

Under nominal conditions, a trajectory is executed using feedback control, wherein feedback trajectory control algorithms may use e.g., a kinodynamic model of autonomous vehicle 10, per-vehicle configuration parameters, and a continuously-calculated estimate of the position, orientation, and velocity of autonomous vehicle 10 to calculate the commands that are provided to the various ECUs included within autonomous vehicle 10.

Feedforward trajectory control algorithms may use a kinodynamic model of autonomous vehicle 10, per-vehicle configuration parameters, and a single estimate of the initial position, orientation, and velocity of autonomous vehicle 10 to calculate a sequence of commands that are provided to the various ECUs included within autonomous vehicle 10, wherein the sequence of commands are executed without using any real-time sensor data (e.g. from sensors 12) or other information.

To execute the above-described trajectories, autonomy control unit 50 may communicate with (and may provide commands to) the various ECUs, using vehicle control unit 54 / 74 as an intermediary. At each iteration of the above-described trajectory execution loop, autonomy control unit 50 may calculate steering, powertrain, and brake commands that are provided to their respective ECUs (e.g., powertrain control unit 64, braking control unit 68, and steering control unit 72; respectively), and may transmit these commands to vehicle control unit 54 / 74. Vehicle control unit 54 / 74 may then validate these commands and may relay them to the various ECUs (e.g., powertrain control unit 64, braking control unit 68, and steering control unit 72; respectively).

### Monitor Assignment Process

As discussed above and during typical operation of autonomous vehicle 10, the autonomy subsystems described above may repeatedly perform the following functionalities of: measuring the surrounding environment using on-board sensors (e.g. using sensors 12); estimating the positions, velocities, and future trajectories of surrounding vehicles, pedestrians, cyclists, other objects near autonomous vehicle 10, and environmental features useful for location determination (e.g., using perception subsystem 100); estimating the position, orientation, and velocity of autonomous vehicle 10 within the operating environment (e.g., using state estimation subsystem 102); planning a nominal trajectory for autonomous vehicle 10 to follow that brings autonomous vehicle 10 closer to the intended destination of autonomous vehicle 10 (e.g., using planning subsystem 104); and generating commands (e.g., control data 20) to cause autonomous vehicle 10 to execute the intended trajectory (e.g., using trajectory control subsystem 110).

The operation of autonomous vehicle 10 may be supervised by a vehicle monitor (e.g., a human vehicle monitor). Specifically and in a fashion similar to the manner in which an air traffic controller monitors the operation of one or more airplanes, a vehicle monitor may monitor the operation of one or more autonomous vehicles (e.g., autonomous vehicle 10).

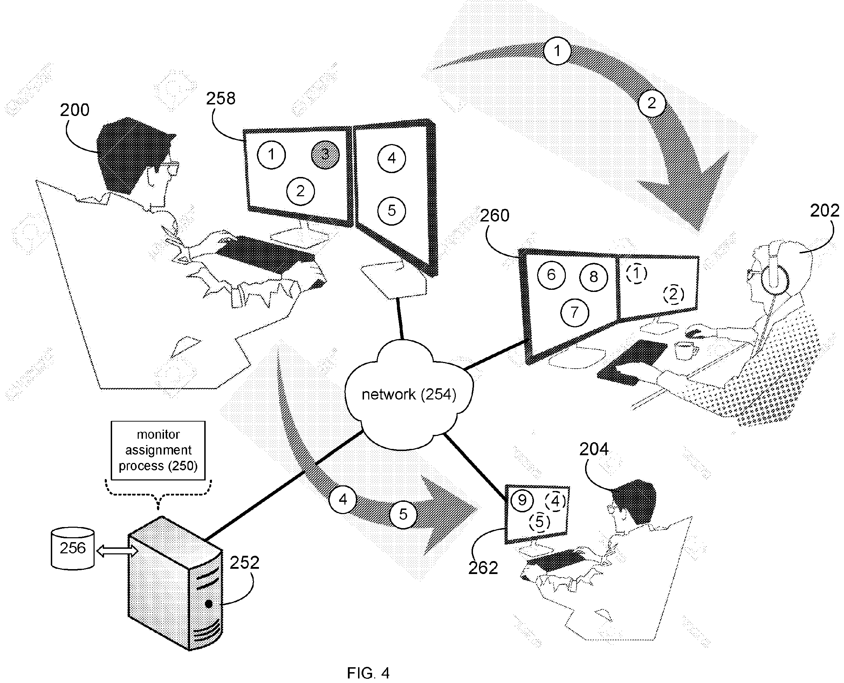

For example and referring also to FIG 4, vehicle monitors (e.g., vehicle monitors 200, 202, 204) may be located in a centralized location (such as a monitoring center) and may monitor the operation of various autonomous vehicles (e.g., autonomous vehicle 10). For example, vehicle monitors 200, 202, 204 may (in this example) be monitoring the operation of nine autonomous vehicles (e.g., autonomous vehicle #1 through autonomous vehicle #9), each of which is represented as a unique circle on the displays of vehicle monitors 200, 202, 204. Specifically and for this example, assume that vehicle monitors 200, 202 are senior vehicle monitors who are capable of monitoring a higher quantity of autonomous vehicles than junior vehicle monitor 204.

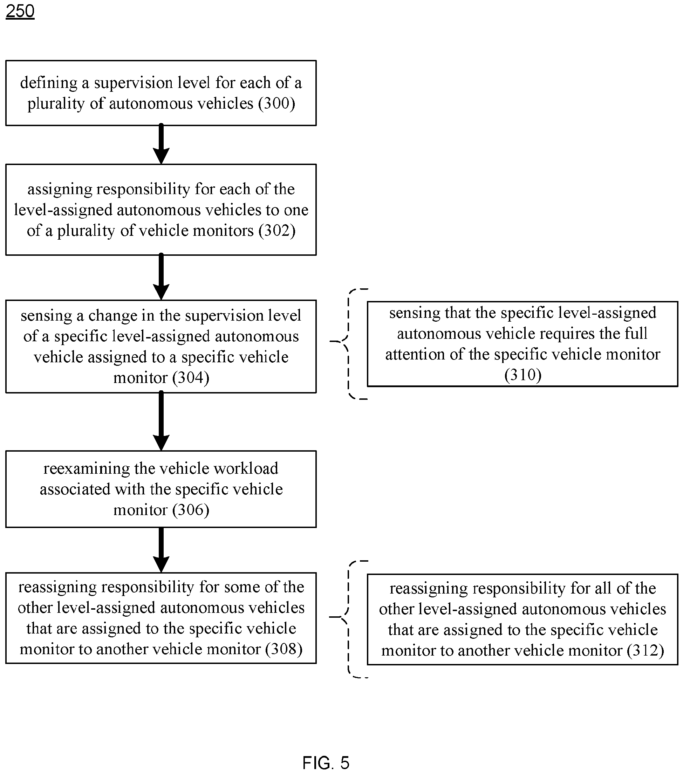

Referring also to FIG 5, monitor assignment process 250 may define 300 a supervision level for each of a plurality of autonomous vehicles, thus defining a plurality of level-assigned autonomous vehicles (e.g., autonomous vehicle #1 through autonomous vehicle #9).

Monitor assignment process 250 may be a server application and may reside on and may be executed by computing device 252, which may be connected to network 254 (e.g., the Internet or a local area network). Examples of computing device 252 may include, but are not limited to: a personal computer, a laptop computer, a personal digital assistant, a data-enabled cellular telephone, a notebook computer, a television with one or more processors embedded therein or coupled thereto, a cable / satellite receiver with one or more processors embedded therein or coupled thereto, a server computer, a series of server computers, a mini computer, a mainframe computer, or a cloud-based computing network.

The instruction sets and subroutines of monitor assignment process 250, which may be stored on storage device 256 coupled to computing device 252, may be executed by one or more processors (not shown) and one or more memory architectures (not shown) included within computing device 252. Examples of storage device 256 may include but are not limited to: a hard disk drive; a RAID device; a random access memory (RAM); a read-only memory (ROM); and all forms of flash memory storage devices.

Network 254 (e.g., the Internet or a local area network) may couple computing device 252 to the client electronic devices (e.g., client electronic devices 258, 260, 262) utilized by vehicle monitors 200, 202, 204 (respectively). Examples of client electronic devices 258, 260, 262 may include, but are not limited to, a data-enabled, cellular telephone, a laptop computer, a personal digital assistant, a personal computer, a notebook computer, a workstation computer, a smart television, and a dedicated network device. Client electronic devices 258, 260, 262 may each execute an operating system, examples of which may include but are not limited to Microsoft Windows ^{tm}, Android ^{tm}, WebOS ^{tm}, iOS ^{tm}, Redhat Linux ^{tm}, or a custom operating system.

The supervision level assigned to each of a plurality of autonomous vehicles (in this example, nine autonomous vehicles) may vary from e.g., none to total. For example, when an autonomous vehicle is out-of-service (e.g., in storage, being charged, or not in use), the supervision level assigned to this vehicle may be none or minimal. Generally, while an autonomous vehicle is being charged, there may be no need for a vehicle monitor to monitor the autonomous vehicle (as it is not moving). Alternatively, the vehicle monitor may provide minimal supervision to monitor e.g., the state of the charge so that a return-to-service time may be determined for the autonomous vehicle.

As could be imagined, the level of supervision that a vehicle monitor must apply to an autonomous vehicle may vary depending upon the specific operating situation of the autonomous vehicle. Therefore, if an autonomous vehicle is driving down a rural roadway with minimal traffic, the vehicle monitor may apply a low level of supervision; wherein if an autonomous vehicle is driving down a congested urban roadway that has rush-hour traffic, the vehicle monitor may apply a higher level of supervision. Further still, there may be situations in which a vehicle monitor may need to devote 100% of their attention to a single autonomous vehicle. For example, if a passenger of the autonomous vehicle requests to speak with a vehicle monitor (e.g., to ask a question about their route, to change their destination, or to complain about the condition of the vehicle), the vehicle monitor may need to dedicate 100% of their attention to the conversation. Further, there may be situations in which an autonomous vehicle needs the vehicle monitor to provide guidance. For example, if there is an accident in the roadway and the travel lane is blocked, the autonomous vehicle may request permission from the vehicle monitor to cross a double yellow line to drive around the accident. This may require the vehicle monitor to review camera data to ensure that the autonomous vehicle may safely cross the double yellow line to get around the accident.

Accordingly, the supervision level defined 300 for each of a plurality of autonomous vehicles may include one or more class-based supervision levels. For example, monitor assignment process 250 may define 300 class-based supervision levels, such as:
- none (e.g., for the autonomous vehicle that is out-of-service or being charged);
- low (e.g., for the autonomous vehicle that is driving down the rural roadway with minimal traffic);
- medium (e.g., for the autonomous vehicle that is driving down the congested urban roadway that has rush-hour traffic); and
- high (e.g., for the autonomous vehicle that has a passenger that wants to chat with the vehicle monitor or needs to cross the double yellow line).

Additionally / alternatively, the supervision level defined 300 for each of a plurality of autonomous vehicles may be much more granular and may include one or more score-based supervision levels.
- 0 (e.g., for the autonomous vehicle that is out-of-service or being charged);
- 1-25 (e.g., for the autonomous vehicle that is driving down the rural roadway with minimal traffic);
- 50-99 (e.g., for the autonomous vehicle that is driving down the congested urban roadway that has rush-hour traffic); and
- 100 (e.g., for the autonomous vehicle that has a passenger that wants to chat with the vehicle monitor or needs to cross the double yellow line).

Monitor assignment process 250 may assign 302 responsibility for each of the level-assigned autonomous vehicles (e.g., autonomous vehicle #1 through autonomous vehicle #9) to one of a plurality of vehicle monitors (e.g., vehicle monitors 200, 202, 204), thus defining a vehicle workload for each of the plurality of vehicle monitors (e.g., vehicle monitors 200, 202, 204).

For this example, assume that monitor assignment process 250:
- assigns 302 responsibility for five level-assigned autonomous vehicles (i.e., level-assigned autonomous vehicles 1-5) to vehicle monitor 200, who is a senior vehicle monitor.
- assigns 302 responsibility for three level-assigned autonomous vehicles (i.e., level-assigned autonomous vehicles 6-8) to vehicle monitor 202, who is a mid-level vehicle monitor.
- assigns 302 responsibility for one level-assigned autonomous vehicles (i.e., level-assigned autonomous vehicle 9) to vehicle monitor 204, who is a junior vehicle monitor.

Specifically and when assigning 302 responsibility for each of the level-assigned autonomous vehicles (e.g., autonomous vehicle #1 through autonomous vehicle #9) to one of a plurality of vehicle monitors (e.g., vehicle monitors 200, 202, 204), monitor assignment process 250 may consider the experience level of the individual vehicle monitors to avoid overloading them. For example,
- senior vehicle monitors may have a maximum workload of seven level-assigned autonomous vehicles (i.e., may be capable of simultaneously monitoring a maximum of seven level-assigned autonomous vehicles);
- mid-level vehicle monitors may have a maximum workload of five level-assigned autonomous vehicles (i.e., may be capable of simultaneously monitoring a maximum of five level-assigned autonomous vehicles); and
- junior vehicle monitors may have a maximum workload of three level-assigned autonomous vehicles (i.e., may be capable of simultaneously monitoring a maximum of three level-assigned autonomous vehicles).

As discussed above, the level of supervision that a level-assigned autonomous vehicles requires may vary from no supervision, to low supervision, to high supervision, to total supervision. Accordingly, the above-described maximum workload descriptions may be for e.g., low supervision level-assigned autonomous vehicles, wherein e.g., a high supervision level-assigned autonomous vehicle may count as e.g., two low supervision level-assigned autonomous vehicle. Therefore and in such a configuration, low supervision level-assigned autonomous vehicles and high supervision level-assigned autonomous vehicles may be mixed and matched across varying levels of vehicle monitors. For example:
- senior vehicle monitors may have a maximum workload of e.g., three high supervision level-assigned autonomous vehicles and one low supervision level-assigned autonomous vehicles;
- mid-level vehicle monitors may have a maximum workload of e.g., two high supervision level-assigned autonomous vehicles and one low supervision level-assigned autonomous vehicles; and
- junior vehicle monitors may have a maximum workload of e.g., one high supervision level-assigned autonomous vehicles and one low supervision level-assigned autonomous vehicles.

As discussed above and for those level-assigned autonomous vehicles that require total supervision, any vehicle monitor that is monitoring a total supervision level-assigned autonomous vehicles may only be monitoring that single level-assigned autonomous vehicle (and no others).

As could be imagined, the supervision levels required by autonomous vehicles will change during their course of operation (e.g., as they progress from being charged / out of service, to navigating rural roads, to navigating crowded city streets, to navigating around accidents, to facilitating communication between a passenger and a vehicle monitor, etc. Accordingly, monitor assignment process 250 may monitor the supervision level of each level-assigned autonomous vehicles (e.g., autonomous vehicle #1 through autonomous vehicle #9) to determine if they have changed.

Upon monitor assignment process 250 sensing 304 a change in the supervision level of a specific level-assigned autonomous vehicle assigned to a specific vehicle monitor, monitor assignment process 250 may reexamine 306 the vehicle workload associated with the specific vehicle monitor. If the vehicle workload associated with the specific vehicle monitor exceeds a defined level, monitor assignment process 250 may reassign 308 responsibility for some of the other level-assigned autonomous vehicles that are assigned to the specific vehicle monitor to another vehicle monitor.

For example, if monitor assignment process 250 senses 304 a change in the supervision level of a specific level-assigned autonomous vehicle (e.g., level-assigned autonomous vehicles 3) assigned to a specific vehicle monitor (e.g., vehicle monitor 200) from low supervision to some other supervision level, monitor assignment process 250 may reexamine 306 the vehicle workload associated with the specific vehicle monitor (e.g., vehicle monitor 200). And if the vehicle workload associated with the specific vehicle monitor (e.g., vehicle monitor 200) exceeds a defined level, monitor assignment process 250 may reassign 308 responsibility for some of the other level-assigned autonomous vehicles that are assigned to the specific vehicle monitor to another vehicle monitor.

As discussed above, assume that monitor assignment process 250 assigns 302 responsibility for five level-assigned autonomous vehicles (i.e., level-assigned autonomous vehicles 1-5) to vehicle monitor 200, who is a senior vehicle monitor. Further and as discussed above, a senior vehicle monitor may have a maximum workload of e.g., seven low supervision level-assigned autonomous vehicles or three high supervision level-assigned autonomous vehicles and one low supervision level-assigned autonomous vehicles. Accordingly, if all five of autonomous vehicles 1-5 assigned 302 to vehicle monitor 200 are low supervision level-assigned autonomous vehicles, the vehicle workload associated with vehicle monitor 200 is acceptable. Therefore, monitor assignment process 250 need not reassign 308 responsibility for any of the level-assigned autonomous vehicles from vehicle monitor 200 to other vehicle monitors.

However, if all five of autonomous vehicles 1-5 assigned 302 to vehicle monitor 200 were initially low supervision level-assigned autonomous vehicles and monitor assignment process 250 senses 304 that the supervision level of four of these low supervision level-assigned autonomous vehicle (e.g., level-assigned autonomous vehicles 1-4) changed from low supervision to high supervision, reassignment 308 may be necessary. Accordingly and upon monitor assignment process 250 reexaminng 306 the vehicle workload associated with vehicle monitor 200, monitor assignment process 250 may determine that the vehicle workload associated with vehicle monitor 200 is not acceptable (as it is now four high supervision level-assigned autonomous vehicles and one low supervision level-assigned autonomous vehicles; which exceeds the maximum vehicle workload of three high supervision level-assigned autonomous vehicles and one low supervision level-assigned autonomous vehicles for a senior vehicle monitor). Therefore, monitor assignment process 250 may reassign 308 responsibility for one of the high supervision level-assigned autonomous vehicles (e.g., level-assigned autonomous vehicles 3) from vehicle monitor 200 to one of vehicle monitor 202 and vehicle monitor 204, as both of vehicle monitors 202, 204 have available workload bandwidth to handle the high supervision level-assigned autonomous vehicle (e.g., level-assigned autonomous vehicles 3).

As discussed above and for those level-assigned autonomous vehicles that require total supervision, any vehicle monitor that is monitoring a total supervision level-assigned autonomous vehicles may only be monitoring that single total supervision level-assigned autonomous vehicle (and no others). Accordingly and in the event that a level-assigned autonomous vehicle being monitored by a vehicle monitor changes to a total supervision level-assigned autonomous vehicle, monitor assignment process 250 may reassign all of the other level-assigned autonomous vehicles currently being monitored by the vehicle monitor.

For example, assume that when sensing 304 a change in the supervision level of a specific level-assigned autonomous vehicle assigned to a specific vehicle monitor, monitor assignment process 250 senses 310 that level-assigned autonomous vehicle 3 has transitioned from a low supervision level-assigned autonomous vehicle to a high supervision level-assigned autonomous vehicle; now requiring the full attention of vehicle monitor 200. For this example, assume that a passenger within level-assigned autonomous vehicle 3 wishes to chat with vehicle monitor 200, thus requiring the full attention of vehicle monitor 200.

Accordingly and when reassigning 308 responsibility for one or more of the level-assigned autonomous vehicles assigned to the specific vehicle monitor to another vehicle monitor, monitor assignment process 250 may reassign 312 responsibility for all of the other level-assigned autonomous vehicles that are assigned to vehicle monitor 200 to another vehicle monitor. For example, monitor assignment process 250 may reassign 312
- responsibility for level-assigned autonomous vehicles 1 from vehicle monitor 200 to vehicle monitor 202;
- responsibility for level-assigned autonomous vehicles 2 from vehicle monitor 200 to vehicle monitor 202;
- responsibility for level-assigned autonomous vehicles 4 from vehicle monitor 200 to vehicle monitor 204; and
- responsibility for level-assigned autonomous vehicles 5 from vehicle monitor 200 to vehicle monitor 204.

Accordingly and after this reassignment 312, the following vehicle workloads will occur:
- vehicle monitor 200 (who is a senior vehicle monitor) will now be responsible for only the total supervision level-assigned autonomous vehicle (i.e., level-assigned autonomous vehicles 3).
- vehicle monitor 202 (who is a mid-level vehicle monitor) will now be responsible for their original three low supervision level-assigned autonomous vehicles (i.e., level-assigned autonomous vehicles 6-8) plus the two reassigned low supervision level-assigned autonomous vehicles (i.e., level-assigned autonomous vehicles 1-2).
- vehicle monitor 204 (who is a junior vehicle monitor) will now be responsible for their original one level-assigned autonomous vehicles (i.e., level-assigned autonomous vehicle 9) plus the two reassigned low supervision level-assigned autonomous vehicles (i.e., level-assigned autonomous vehicles 4-5).

### General

As will be appreciated by one skilled in the art, the present disclosure may be embodied as a method, a system, or a computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium having computer-usable program code embodied in the medium.

Any suitable computer usable or computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object oriented programming language such as Java, Smalltalk, C++ or the like. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet (e.g., network 14).

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general purpose computer / special purpose computer / other programmable data processing apparatus, such that the instructions, which execute via the processor of the computer or other programmable data processing apparatus, create means for implementing the functions/acts specified in the flowchart and/or block diagram block or blocks.

These computer program instructions may also be stored in a computer-readable memory that may direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope of the disclosure. The embodiment was chosen and described in order to best explain the principles of the disclosure and the practical application, and to enable others of ordinary skill in the art to understand the disclosure for various embodiments with various modifications as are suited to the particular use contemplated.

## Claims

1. A computer-implement method, executed on a computing device, comprising:
defining a supervision level for each of a plurality of autonomous vehicles, thus defining a plurality of level-assigned autonomous vehicles;
determining a respective maximum workload for each vehicle monitor of a plurality of vehicle monitors;
assigning responsibility for each of the level-assigned autonomous vehicles to a respective one of the plurality of vehicle monitors based on the respective maximum workload of each vehicle monitor and the supervision level for the respective level-assigned autonomous vehicle, thus defining a vehicle workload for each of the plurality of vehicle monitors;
sensing a change in the supervision level of a specific level-assigned autonomous vehicle assigned to a specific vehicle monitor, wherein sensing the change in supervision level comprises determining that the specific level-assigned autonomous vehicle is driving down a rural roadway with minimal traffic; and
responsive to sensing the change in the supervision level of the specific level-assigned autonomous vehicle, reexamining the vehicle workload associated with the specific vehicle monitor.

2. The computer-implement method of claim 1 wherein sensing a change in the supervision level of a specific level-assigned autonomous vehicle assigned to a specific vehicle monitor includes:
sensing that the specific level-assigned autonomous vehicle requires the full attention of the specific vehicle monitor.

3. The computer-implement method of claim 1 further comprising:
if the vehicle workload associated with the specific vehicle monitor exceeds a defined level, reassigning responsibility for some of the other level-assigned autonomous vehicles that are assigned to the specific vehicle monitor to another vehicle monitor.

4. The computer-implement method of claim 3 wherein reassigning responsibility for one or more of the level-assigned autonomous vehicles assigned to the specific vehicle monitor to another vehicle monitor includes:
reassigning responsibility for all of the other level-assigned autonomous vehicles that are assigned to the specific vehicle monitor to another vehicle monitor.

5. The computer-implement method of claim 1 wherein the supervision level defined for each of a plurality of autonomous vehicles includes one or more class-based supervision levels.

6. The computer-implement method of claim 1 wherein the supervision level defined for each of a plurality of autonomous vehicles includes one or more score-based supervision levels.

7. The computer-implement method of claim 1 wherein the plurality of vehicle monitors includes:
a plurality of human vehicle monitors.

8. A computer program product residing on a computer readable medium having a plurality of instructions stored thereon which, when executed by a processor, cause the processor to perform the computer implemented method of any one of claims 1 to 7.

9. A computing system including a processor and memory configured to perform operations comprising:
defining a supervision level for each of a plurality of autonomous vehicles, thus defining a plurality of level-assigned autonomous vehicles;
determining a respective maximum workload for each vehicle monitor of a plurality of vehicle monitors;
assigning responsibility for each of the level-assigned autonomous vehicles to a respective one of the plurality of vehicle monitors based on the respective maximum workload of each vehicle monitor and the supervision level for the respective level-assigned autonomous vehicle, thus defining a vehicle workload for each of the plurality of vehicle monitors;
sensing a change in the supervision level of a specific level-assigned autonomous vehicle assigned to a specific vehicle monitor, wherein sensing the change in supervision level comprises determining that the specific level-assigned autonomous vehicle is driving down a rural roadway with minimal traffic; and
responsive to sensing the change in the supervision level of the specific level-assigned autonomous vehicle, reexamining the vehicle workload associated with the specific vehicle monitor.

10. The computing system of claim 9 wherein sensing a change in the supervision level of a specific level-assigned autonomous vehicle assigned to a specific vehicle monitor includes:
sensing that the specific level-assigned autonomous vehicle requires the full attention of the specific vehicle monitor.

11. The computing system of claim 9 further comprising:
if the vehicle workload associated with the specific vehicle monitor exceeds a defined level, reassigning responsibility for some of the other level-assigned autonomous vehicles that are assigned to the specific vehicle monitor to another vehicle monitor.

12. The computing system of claim 11 wherein reassigning responsibility for one or more of the level-assigned autonomous vehicles assigned to the specific vehicle monitor to another vehicle monitor includes:
reassigning responsibility for all of the other level-assigned autonomous vehicles that are assigned to the specific vehicle monitor to another vehicle monitor.

13. The computing system of claim 9 wherein the supervision level defined for each of a plurality of autonomous vehicles includes one or more class-based supervision levels.

14. The computing system of claim 9 wherein the supervision level defined for each of a plurality of autonomous vehicles includes one or more score-based supervision levels.

15. The computing system of claim 9 wherein the plurality of vehicle monitors includes:
a plurality of human vehicle monitors.

## Patentansprüche

1. Computerimplementiertes Verfahren, ausgeführt auf einer Rechenvorrichtung, Folgendes umfassend:
Definieren einer Überwachungsebene für jedes von einer Vielzahl von autonomen Fahrzeugen, sodass eine Vielzahl von ebenenzugewiesenen autonomen Fahrzeugen definiert wird;
Bestimmen einer jeweiligen maximalen Arbeitsbelastung für jeden Fahrzeugmonitor einer Vielzahl von Fahrzeugmonitoren;
Zuweisen der Verantwortung für jedes der ebenenzugewiesenen autonomen Fahrzeuge zu einem jeweiligen einen der Vielzahl von Fahrzeugmonitoren basierend auf der jeweiligen maximalen Arbeitsbelastung jedes Fahrzeugmonitors und der Überwachungsebene für das jeweilige ebenenzugewiesene autonome Fahrzeug, wodurch eine Fahrzeugarbeitsbelastung für jeden der Vielzahl von Fahrzeugmonitoren definiert wird;
Erfassen einer Änderung der Überwachungsebene eines bestimmten ebenenzugewiesenen autonomen Fahrzeugs, das einem bestimmten Fahrzeugmonitor zugewiesen ist, wobei Erfassen der Änderung der Überwachungsebene Bestimmen umfasst, dass das bestimmte ebenenzugewiesene autonome Fahrzeug eine ländliche Straße mit minimalem Verkehr entlangfährt; und
erneutes Prüfen der Fahrzeugarbeitsbelastung, die dem bestimmten Fahrzeugmonitor zugeordnet ist, als Reaktion auf das Erfassen der Änderung der Überwachungsebene des bestimmten ebenenzugewiesenen autonomen Fahrzeugs.

2. Computerimplementiertes Verfahren nach Anspruch 1, wobei Erfassen einer Änderung des Überwachungsniveaus eines bestimmten ebenenzugewiesenen autonomen Fahrzeugs, das einem bestimmten Fahrzeugmonitor zugewiesen ist, Folgendes beinhaltet:
Erfassen, dass das bestimmte ebenenzugewiesene autonome Fahrzeug die volle Aufmerksamkeit des bestimmten Fahrzeugmonitors erfordert.

3. Computerimplementiertes Verfahren nach Anspruch 1, ferner Folgendes umfassend:
Neuzuweisen der Verantwortung für einige der anderen ebenenzugewiesenen autonomen Fahrzeuge, die dem bestimmten Fahrzeugmonitor zugewiesen sind, zu einem anderen Fahrzeugmonitor, wenn die dem bestimmten Fahrzeugmonitor zugeordnete Fahrzeugarbeitsbelastung einen definierten Wert überschreitet.

4. Computerimplementiertes Verfahren nach Anspruch 3, wobei Neuzuweisen der Verantwortung für eines oder mehrere der ebenenzugeordneten autonomen Fahrzeuge, die dem bestimmten Fahrzeugmonitor zugewiesen sind, zu einem anderen Fahrzeugmonitor Folgendes beinhaltet:
Neuzuweisen der Verantwortung für alle anderen ebenenzugewiesenen autonomen Fahrzeuge, die dem bestimmten Fahrzeugmonitor zugewiesen sind, zu einem anderen Fahrzeugmonitor.

5. Computerimplementiertes Verfahren nach Anspruch 1, wobei die Überwachungsebene, die für jedes von einer Vielzahl von autonomen Fahrzeugen definiert ist, eine oder mehrere klassenbasierte Überwachungsebenen beinhaltet.

6. Computerimplementiertes Verfahren nach Anspruch 1, wobei die Überwachungsebene, die für jedes von einer Vielzahl von autonomen Fahrzeugen definiert ist, eine oder mehrere bewertungsbasierte Überwachungsebenen beinhaltet.

7. Computerimplementiertes Verfahren nach Anspruch 1, wobei die Vielzahl von Fahrzeugmonitoren Folgendes beinhaltet:
eine Vielzahl von menschlichen Fahrzeugmonitoren.

8. Computerprogrammprodukt, das sich auf einem computerlesbaren Medium befindet, mit einer darauf gespeicherten Vielzahl von Anweisungen, die bei Ausführung durch einen Prozessor den Prozessor veranlassen, das computerimplementierte Verfahren nach einem der Ansprüche 1 bis 7 durchzuführen.

9. Computersystem, beinhaltend einen Prozessor und Speicher, das dazu konfiguriert ist, Operationen durchzuführen, Folgendes umfassend:
Definieren einer Überwachungsebene für jedes von einer Vielzahl von autonomen Fahrzeugen, sodass eine Vielzahl von ebenenzugewiesenen autonomen Fahrzeugen definiert wird;
Bestimmen einer jeweiligen maximalen Arbeitsbelastung für jeden Fahrzeugmonitor einer Vielzahl von Fahrzeugmonitoren;
Zuweisen der Verantwortung für jedes der ebenenzugewiesenen autonomen Fahrzeuge zu einem jeweiligen einen der Vielzahl von Fahrzeugmonitoren basierend auf der jeweiligen maximalen Arbeitsbelastung jedes Fahrzeugmonitors und der Überwachungsebene für das jeweilige ebenenzugewiesene autonome Fahrzeug, wodurch eine Fahrzeugarbeitsbelastung für jeden der Vielzahl von Fahrzeugmonitoren definiert wird;
Erfassen einer Änderung der Überwachungsebene eines bestimmten ebenenzugewiesenen autonomen Fahrzeugs, das einem bestimmten Fahrzeugmonitor zugewiesen ist, wobei Erfassen der Änderung der Überwachungsebene Bestimmen umfasst, dass das bestimmte ebenenzugewiesene autonome Fahrzeug eine ländliche Straße mit minimalem Verkehr entlangfährt; und
erneutes Prüfen der Fahrzeugarbeitsbelastung, die dem bestimmten Fahrzeugmonitor zugeordnet ist, als Reaktion auf das Erfassen der Änderung der Überwachungsebene des bestimmten ebenenzugewiesenen autonomen Fahrzeugs.

10. Computersystem nach Anspruch 9, wobei Erfassen einer Änderung des Überwachungsniveaus eines bestimmten ebenenzugewiesenen autonomen Fahrzeugs, das einem bestimmten Fahrzeugmonitor zugewiesen ist, Folgendes beinhaltet:
Erfassen, dass das bestimmte ebenenzugewiesene autonome Fahrzeug die volle Aufmerksamkeit des bestimmten Fahrzeugmonitors erfordert.

11. Computersystem nach Anspruch 9, ferner umfassend:
Neuzuweisen der Verantwortung für einige der anderen ebenenzugewiesenen autonomen Fahrzeuge, die dem bestimmten Fahrzeugmonitor zugewiesen sind, zu einem anderen Fahrzeugmonitor, wenn die dem bestimmten Fahrzeugmonitor zugeordnete Fahrzeugarbeitsbelastung einen definierten Wert überschreitet.

12. Computersystem nach Anspruch 11, wobei Neuzuweisen der Verantwortung für eines oder mehrere der ebenenzugeordneten autonomen Fahrzeuge, die dem bestimmten Fahrzeugmonitor zugewiesen sind, zu einem anderen Fahrzeugmonitor Folgendes beinhaltet:
Neuzuweisen der Verantwortung für alle anderen ebenenzugewiesenen autonomen Fahrzeuge, die dem bestimmten Fahrzeugmonitor zugewiesen sind, zu einem anderen Fahrzeugmonitor.

13. Computersystem nach Anspruch 9, wobei die Überwachungsebene, die für jedes von einer Vielzahl von autonomen Fahrzeugen definiert ist, eine oder mehrere klassenbasierte Überwachungsebenen beinhaltet.

14. Computersystem nach Anspruch 9, wobei die Überwachungsebene, die für jedes von einer Vielzahl von autonomen Fahrzeugen definiert ist, eine oder mehrere bewertungsbasierte Überwachungsebenen beinhaltet.

15. Computersystem nach Anspruch 9, wobei die Vielzahl von Fahrzeugmonitoren Folgendes beinhaltet:
eine Vielzahl von menschlichen Fahrzeugmonitoren.

## Revendications

1. Procédé mis en œuvre par ordinateur, exécuté sur un dispositif informatique, comprenant :
la définition d'un niveau de supervision pour chacun d'une pluralité de véhicules autonomes, définissant ainsi une pluralité de véhicules autonomes auxquels un niveau est attribué ;
la détermination d'une charge de travail maximale respective pour chaque moniteur de véhicule d'une pluralité de moniteurs de véhicule ;
l'attribution de la responsabilité pour chacun des véhicules autonomes auxquels un niveau est attribué à l'un respectif de la pluralité de moniteurs de véhicule sur la base de la charge de travail maximale respective de chaque moniteur de véhicule et du niveau de supervision du véhicule autonome respectif auquel un niveau est attribué, définissant ainsi une charge de travail de véhicule pour chacun de la pluralité de moniteurs de véhicule ;
la détection d'un changement dans le niveau de supervision d'un véhicule autonome spécifique auquel un niveau est attribué attribué à un moniteur de véhicule spécifique, dans lequel la détection du changement dans le niveau de supervision comprend la détermination du fait que le véhicule autonome spécifique auquel un niveau est attribué roule sur une route rurale avec un trafic minimal ; et
en réponse à la détection du changement du niveau de supervision du véhicule autonome spécifique auquel un niveau est attribué, le réexamen de la charge de travail de véhicule associée au moniteur de véhicule spécifique.

2. Procédé mis en œuvre par ordinateur selon la revendication 1, dans lequel la détection d'un changement dans le niveau de supervision d'un véhicule autonome spécifique auquel un niveau est attribué attribué à un moniteur de véhicule spécifique comporte :
la détection du fait que le véhicule autonome spécifique auquel un niveau est attribué nécessite toute l'attention du moniteur de véhicule spécifique.

3. Procédé mis en œuvre par ordinateur selon la revendication 1, comprenant également :
si la charge de travail de véhicule associée au moniteur de véhicule spécifique dépasse un niveau défini, la réattribution de la responsabilité pour certains des autres véhicules autonomes auxquels un niveau est attribué qui sont attribués au moniteur de véhicule spécifique à un autre moniteur de véhicule.

4. Procédé de mise en œuvre par ordinateur selon la revendication 3, dans lequel la réattribution de la responsabilité pour l'un ou plusieurs des véhicules autonomes auxquels un niveau est attribué attribués au moniteur de véhicule spécifique à un autre moniteur de véhicule comporte :
la réattribution de la responsabilité pour tous les autres véhicules autonomes auxquels un niveau est attribué qui sont attribués au moniteur de véhicule spécifique à un autre moniteur de véhicule.

5. Procédé mis en œuvre par ordinateur selon la revendication 1, dans lequel le niveau de supervision défini pour chacun d'une pluralité de véhicules autonomes comporte un ou plusieurs niveaux de supervision sur la base de la classe.

6. Procédé mis en œuvre par ordinateur selon la revendication 1, dans lequel le niveau de supervision défini pour chacun d'une pluralité de véhicules autonomes comporte un ou plusieurs niveaux de supervision sur la base du score.

7. Procédé mis en œuvre par ordinateur selon la revendication 1, dans lequel la pluralité de moniteurs de véhicule comporte :
une pluralité de moniteurs de véhicules humains.

8. Produit de programme informatique résidant sur un support lisible par ordinateur sur lequel sont stockées une pluralité d'instructions qui, lorsqu'elles sont exécutées par un processeur, amènent le processeur à exécuter le procédé mis en œuvre par ordinateur selon l'une quelconque des revendications 1 à 7.

9. Système informatique comportant un processeur et une mémoire configurés pour effectuer des opérations comprenant :
la définition d'un niveau de supervision pour chacun d'une pluralité de véhicules autonomes, définissant ainsi une pluralité de véhicules autonomes auxquels un niveau est attribué ;
la détermination d'une charge de travail maximale respective pour chaque moniteur de véhicule d'une pluralité de moniteurs de véhicule ;
l'attribution de la responsabilité pour chacun des véhicules autonomes auxquels un niveau est attribué à l'un respectif de la pluralité de moniteurs de véhicule sur la base de la charge de travail maximale respective de chaque moniteur de véhicule et du niveau de supervision du véhicule autonome respectif auquel un niveau est attribué, définissant ainsi une charge de travail de véhicule pour chacun de la pluralité de moniteurs de véhicule ;
la détection d'un changement dans le niveau de supervision d'un véhicule autonome spécifique auquel un niveau est attribué attribué à un moniteur de véhicule spécifique, dans lequel la détection du changement dans le niveau de supervision comprend la détermination du fait que le véhicule autonome spécifique auquel un niveau est attribué roule sur une route rurale avec un trafic minimal ; et
en réponse à la détection du changement du niveau de supervision du véhicule autonome spécifique auquel un niveau est attribué, le réexamen de la charge de travail de véhicule associée au moniteur de véhicule spécifique.

10. Système informatique selon la revendication 9, dans lequel la détection d'un changement dans le niveau de supervision d'un véhicule autonome spécifique auquel un niveau est attribué attribué à un moniteur de véhicule spécifique comporte :
la détection du fait que le véhicule autonome spécifique auquel un niveau est attribué nécessite toute l'attention du moniteur de véhicule spécifique.

11. Système informatique selon la revendication 9, comprenant également :
si la charge de travail de véhicule associée au moniteur de véhicule spécifique dépasse un niveau défini, la réattribution de la responsabilité pour certains des autres véhicules autonomes auxquels un niveau est attribué qui sont attribués au moniteur de véhicule spécifique à un autre moniteur de véhicule.

12. Système informatique selon la revendication 11, dans lequel la réattribution de la responsabilité pour l'un ou plusieurs des véhicules autonomes auxquels un niveau est attribué attribués au moniteur de véhicule spécifique à un autre moniteur de véhicule comporte :
la réattribution de la responsabilité pour tous les autres véhicules autonomes auxquels un niveau est attribué qui sont attribués au moniteur de véhicule spécifique à un autre moniteur de véhicule.

13. Système informatique selon la revendication **9,** dans lequel le niveau de supervision défini pour chacun d'une pluralité de véhicules autonomes comporte un ou plusieurs niveaux de supervision sur la base de la classe.

14. Système informatique selon la revendication **9,** dans lequel le niveau de supervision défini pour chacun d'une pluralité de véhicules autonomes comporte un ou plusieurs niveaux de supervision sur la base du score.

15. Système informatique selon la revendication **9,** dans lequel la pluralité de moniteurs de véhicule comporte :
une pluralité de moniteurs de véhicules humains.
